(19) Europäisches Patentamt
European Patent Office
Office européen des brevets

(11) Veröffentlichungsnummer : **0 066 333**
**B1**

(12) # EUROPÄISCHE PATENTSCHRIFT

(45) Veröffentlichungstag der Patentschrift : **28.08.85**

(51) Int. Cl.⁴ : **H 01 C 7/10**, C 04 B 35/00

(21) Anmeldenummer : **82200616.9**

(22) Anmeldetag : **19.05.82**

(54) **Nichtlinearer Widerstand und Verfahren zu seiner Herstellung.**

(30) Priorität : **29.05.81 DE 3121290**

(43) Veröffentlichungstag der Anmeldung : **08.12.82 Patentblatt 82/49**

(45) Bekanntmachung des Hinweises auf die Patenterteilung : **28.08.85 Patentblatt 85/35**

(84) Benannte Vertragsstaaten : **BE DE FR GB NL**

(56) Entgegenhaltungen :
**EP-A- 0 041 379**
**EP-A- 0 044 981**
**GB-A- 1 419 284**
**NL-A- 7 801 443**
**CHEMICAL ABSTRACTS, Band 88, Nr. 8, 20. Februar 1978, Seite 454, Nr. 57530u, Columbus, Ohio, USA**
**CHEMICAL ABSTRACTS, Band 95, Nr. 10, 7. September 1981, Seite 608, Nr. 89957z, Columbus, Ohio, USA**

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**BE FR GB NL**

(72) Erfinder : **Hennings, Detlev, Dr.**
**Hangstrasse 28**
**D-5100 Aachen (DE)**
Erfinder : **Schnell, Axel, Dr.**
**Schlossweiherstrasse 39**
**D-5100 Aachen (DE)**
Erfinder : **Schreinemacher, Herbert**
**Sittarder Strasse 53**
**D-5100 Aachen (DE)**

(74) Vertreter : **Nehmzow-David, Fritzi-Maria et al**
**Philips Patentverwaltung GmbH Billstrasse 80 Postfach 10 51 49**
**D-2000 Hamburg 28 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 066 333 B1

Jouve, 18, rue St-Denis, 75001 Paris, France

**Beschreibung**

Die Erfindung betrifft einen nichtlinearen Widerstand mit einem keramischen Sinterkörper auf Basis eines polykristallinen, mit einer geringen Menge eines Metalloxids zur Erzeugung einer N-Typ-Leitfähigkeit dotierten Erdalkalimetalltitanats mit auf einander gegenüberliegenden Flächen angebrachten Elektroden. Die Erfindung betrifft weiter ein Verfahren zur Herstellung eines solchen Widerstandes.

Unter nichtlinearen Widerständen sind im vorliegenden Fall Widerstände mit NTC-Charakteristik (Widerstandswert nimmt unabhängig von der Meßspannung mit steigender Temperatur ab) und Widerstände mit VDR-Charakteristik (Widerstandswert hängt nur von der angelegten Spannung ab) zu verstehen.

Aus der deutschen Patentanmeldung P 30 19 969.0 ist ein spannungsabhängiger Widerstand bekannt, der auf N-dotiertem Strontiumtitanat basiert, welchem vor dem Sintern ein geringer Anteil einer Bleigermanat-Phase zugesetzt wurde, die zur Ausbildung von isolierenden Korngrenzschichten im polykristallinen Gefüge des Sinterkörpers führt. Dieser bekannte Widerstand ist wegen seiner relativ hohen Einsatzfeldstärke — eine Stromdichte z. B. von etwa 3 $mA/cm^2$ ergibt sich erst bei Feldern von etwa 6 kV/cm — nur begrenzt einsetzbar ; er ist z. B. nicht geeignet für moderne Halbleiter-Schaltkreise, die mit niedrigen Spannungen arbeiten.

Der Erfindung lieft die Aufgabe zugrunde, einen nichtlinearen Widerstand nach dem Oberbegriff des Anspruches und ein Verfahren zu seiner Herstellung derart auszubilden, daß nicht nur ein nichtlinearer Widerstand mit niedriger Einsatzfeldstärke erhalten wird, sondern daß dieser Widerstand wahlweise als VDR- oder als NTC-Widerstand ausgebildet ist.

Diese Aufgabe wird erfindungsgemäß dadurch gelöst, daß der Sinterkörper an seinen Korngrenzen durch Nachoxidation des Sinterkörpers gebildete isolierende Schichten enthält und aus einem Erdalkalimetalltitanat mit Perowskitstruktur der allgemeinen Formel

$$(A_{1-x}SE_x)TiO_3 \cdot yTiO_2 \text{ oder } A(Ti_{1-x}Me_x)O_3 \cdot yTiO_2$$

besteht, worin bedeuten :

A = Erdalkalimetall

SE = Seltenerdmetall

Me = Metall mit einer Wertigkeit von 5 oder mehr $0{,}000\,5 < x <$ Löslichkeitsgrenze in der Perowskitphase

y = 0,001 bis 0,02.

Ein Herstellungsverfahren für den Sinterkörper der obengenannten Art wird erfindungsgemäß so durchgeführt, daß der keramische Körper zunächst in reduzierender Atmosphäre gesintert und daß dieser Sinterkörper anschließend in oxidierender Atmosphäre, vorzugsweise in Luft, nachoxidiert wird, wobei der Sinterkörper durch Auswahl der Nachoxidationstemperatur und der Nachoxidationsdauer in seinem nichtlinearen Widerstandsverlauf derart einstellbar wird, daß eine anfänglich vorhandene NTC-Charakteristik allmählich nur bei immer höheren Temperaturen beobachtbar ist und im Bereich der Betriebstemperatur des Widerstandes in eine VDR-Charakteristik übergeht.

Durch das Sintern in reduzierender Atmosphäre wird der Sinterkörper durchgehend halbleitend gemacht, und anschließend werden durch Nachoxidation Kornrandbereiche der halbleitenden Körner des polykristallinen Gefüges des Sinterkörpers durch Ausbildung von hochohmigen Oxidschichten umgewandelt. Je nach Höhe der Nachoxidationstemperatur und der Nachoxidationdauer können dadurch Sinterkörper beliebig hergestellt werden, bei denen die NTC-Charakteristik oder die VDR-Charakteristik überwiegt.

Nach vorteilhaften Weiterbildungen der Erfindung sind als Erdalkalimetall Strontium und als dotierende Metalloxide $La_2O_3$, $Nb_2O_5$ oder $WO_3$ gewählt. Der Einbau der dotierenden Metalloxide in das Perowskitgitter des $SrTiO_3$ erfolgt durch Reaktion bereits während der Vorsinterung zur Herstellung des Sinterkörpers. Außer den genannten Dotierstoffen sind auch andere Metalloxide denkbar, z. B. $Y_2O_3$, $Sm_2O_3$, $Ta_2O_5$, $As_2O_5$, $Sb_2O_5$, $Mo_2O_3$ oder $U_3O_8$.

Je nach ihrem Ionenradius werden die dotierenden Ionen entweder auf Sr- oder auf Ti-Plätzen im Perowskitgitter des $SrTiO_3$ eingebaut. Durch Röntgenstrukturanalyse wurde nachgewiesen, daß sich das Große $La^{3+}$-Ion ($r_{La}3+ = 0{,}122$ nm) auf einen Sr-Platz ($r_{Sr}2+ = 0{,}127$ nm) einbaut. Durch analoge Studien an $PbTiO_3$ konnte nachgewiesen werden, daß sich das kleinere $Nb^{5+}$-Ion ($r_{Nb}5+ = 0{,}069$ nm) auf Ti-Plätzen ($r_{Ti}4+ = 0{,}064$ nm) einbaut. Aufgrund des Ionenradius des $W^{6+}$-Ions ($r_W6+ = 0{,}062$ nm) kann entsprechend gefolgert werden, daß es sich ebenfalls auf Ti-Plätzen einbaut.

Nach der Vorsinterung wird das dotierte Erdalkalimetalltitanat durch mahlen in einer Kugelmühle in einen sinterfähigen feinpulverisierten Zustand versetzt und durch Pressen zu einem in der Regel scheibenförmigen Körper verdichtet. Nur wenn die Sinterung in einer reduzierenden Atmosphäre erfolgt, tragen die Donatorladungen direkt zur Leitfähigkeit bei. Dieser Zustand wird als Elektronenkompensation bezeichnet. Die chemische Charakterisierung derartig elektronenkompensierter, halbleitender Perowskitphasen mit N-Dotierung lautet für die Dotierungen gemäß dem Anmeldungsgegenstand

$$Sr_{1-x}La^{\bullet}_{x}TiO_3$$

$$Sr(Ti_{1-x}Nb^{\bullet}_{x})O_3$$

$$Sr(Ti_{1-x}W^{\bullet\bullet}_{x})O_3$$

$\cdot$ = Symbol für Donatorelektron

Diese elektronenkompensierten Materialien haben einen spezifischen Widerstand in der Größenordnung von 1 Ω · cm.

Werden die Proben dagegen in oxidierender Atmosphäre gesintert, so erfolgt die Kompensation der Donatorladungen über Kationenleerstellen, vornehmlich Leerstellen auf Sr-Plätzen. Derartig leerstellenkompensierte Materialien sind hochisolierend, da die Kationenleerstellen als sehr starke Elektronenacceptoren wirken. Die chemische Charakterisierung leerstellenkompensierter Materialien lautet für die Dotierungen gemäß dem Anmeldungsgegenstand :

$$Sr_{1-3/2x}La^{\bullet}_{x}\square_{x/2}''TiO_3$$

$$Sr_{1-x/2}\square_{x/2}''(Ti_{1-x}Nb^{\bullet}_{x})O_3$$

$$Sr_{1-x}\square_{x}''(Ti_{1-x}W^{\bullet}_{x})O_3$$

' = Symbol für Acceptorelektron
□ = Symbol für Gitterleerstellen

Diese leerstellenkompensierten Materialien haben einen spezifischen Widerstand in der Größenordnung von $10^{13}$ Ω · cm.

Der Erfindung lieft die Erkenntnis zugrunde, daß die elektronenkompensierte hableitende Keramik durch Nachoxidation in die hochisolierende leerstellenkompensierte Form überführbar ist. Zwischen der rein elektronenkompensierten Form, die einer Perowskitkeramik mit NTC-Eigenschaften entspricht, und der rein leerstellenkompensierten Form, die einer Perowskitkeramik mit VDR-Eingenschaften entspricht, sind beliebig viele Übergangszustände herstellbar. Reaktionskinetische Experimente an elektronenkompensiertem halbleitendem $Ba_{1-x}La^{\bullet}_{x}TiO_3$ ($x \sim 0{,}005$ bis 0,02) haben ergeben, daß die Oxidation stets an den Korngrenzen beginnt, wobei sich ein halbleitendes keramisches Material mit hochisolierenden Kornrandschichten bildet. Ganz analoge Vorgänge finden bei der Oxidation von halbleitendem N-dotiertem $SrTiO_3$ statt.

Ein besonderer Vorteil, der mit der Erfindung erzielt wird, ist außer der Einstellbarkeit der Kennlinie der einen keramischen Sinterkörper gemäß der vorliegenden Anmeldung enthaltenden Widerstände die niedrige Einsatzfeldstärke bei Widerständen mit VDR-Charakteristik. Gegenüber dem bekannten Widerstand gemäß der deutschen Patentanmeldung P 30 19 969.0 zeichnen sich die Widerstände mit VDR-Charakteristik gemäß der vorliegenden Anmeldung um eine um den Faktor >20 niedrigere Einsatzfeldstärke aus.

Damit werden Varistoren mit Sinterkörpern nach den Anmeldungsgegenstand besonders einsatzfähig für moderne Halbleiter-Schaltkreise, die mit niedrigen Spannungen arbeiten. Die genannte niedrige Einsatzfeldstärke zeigen die Varistoren mit Sinterkörpern sowohl mit La- als auch mit Nb- und W-Dotierung. Hierfür ist von Bedeutung, daß der Sinterkörper einen geringen $TiO_2$-Überschuß aufweist und daß er durch Nachoxidation gebildete Isolierschichten hat. Diese Isolierschichten können von den Randzonen des Sinterkörpers über die Dicke des Sinterkörpers einen Gradienten aufweisen.

Der $TiO_2$-Überschuß des Ausgangsmaterials für den Sinterkörper führt neben den Sinterbedingungen, im wesentlichen ist hier an die Sintertemperatur zu denken, und neben der Konzentration der Dotierung zu einem Kornwachstum. Die Korngröße der polykristallinen Struktur hat einen entscheidenden Einfluß auf die Einsatzfeldstärke des nichtlinearen Widerstandes. Je geringer die Korngröße, desto höher ist im allgemeinen die Einsatzfeldstärke des Widerstandes.

Es ist jedoch darauf hinzuweisen, daß bei zu niedriger Einsatzfeldstärke der Stromindex β immer ungünstigere Werte annimmt. Der Stromindex β ergibt sich aus der Formel $U = C \cdot I\beta$, worin bedeuten : I = Strom durch den Widerstand in Ampère ; U = Spannungsabfall am Widerstand in Volt ; C = geometrieabhängige Konstante, sie gibt die Spannung an bei I = 1 A (in praktischen Fällen kann sie Werte zwischen 15 und einigen tausend annehmen) ; β = Stromindex, Nichtlinearitätskoeffizient oder Regelfaktor. Er ist materialabhängig und ist ein Maß für die Steilheit der Strom-Spannungs-Kennlinie. Vorzugsweise soll der β-Wert so klein wie möglich sein, weil bei einem kleinen Wert für β starke Stromänderungen nur zu kleinen Spannungsänderungen am nichtlinearen Widerstand führen.

Anhand der Zeichnung werden Ausführungsbeispiele der Erfindung beschrieben und in ihrer Wirkungsweise erläutert. Es zeigen

Figur 1 Strom-Spannungs-Kennlinie eines nichtlinearen Widerstandes gemäß der Erfindung

Figuren 2a bis 2c Einsatzspannungen bei einem Strom von 1mA und Stromindices β für

unterschiedliche nichtlineare Widerstände gemäß der Erfindung in Abhängigkeit von der Nachoxidationstemperatur

Figur 3 schematische Darstellung der Strom- und Temperaturabhängigkeit des elektrischen Widerstandes der nichtlinearen Witerstände gemäß der Erfindung

Figur 4 Strom- und Temperaturabhängigkeit des elektrischen Widerstandes eines nichtlinearen Widerstandes gemäß der Erfindung bei unterschiedlichen Nachoxidationstemperaturen.

Figur 5 eine Darstellung eines fertigen, nichtlinearen Widerstandes gemäß der Erfindung.

Im folgenden wird zunachst die Herstellung von nichtlinearen Widerständen nach dem Anmeldungsgegenstand beschrieben.

1. Herstellung der keramischen Sinterkörper :

Als Ausgangsmaterialien für den keramischen Sinterkörper wurden $SrCo_3$, $TiO_2$ und als dotierende Metalloxide $La_2O_3$ oder $Nb_2O_5$ oder $WO_3$ verwendet. Bei der Präparation der keramischen Masse gemäß den Zusammensetzungen $(Sr_{1-x}La_x)TiO_3 \cdot yTiO_2$, $Sr(Ti_{1-x}Nb_x)O_3 \cdot yTiO_2$ oder $Sr(Ti_{1-x}W_x)O_3 \cdot yTiO_2$ mit $0{,}000\,5 < x <$ Löslichkeitsgrenze in der Perowskitphase und y = 0,001 bis 0,02, ist der $TiO_2$-Überschuß mit 0,001 bis 0,02 deshalb gewählt, um stets einen geringen Überschuß von $Ti^{4+}$-Ionen zu haben. Hierdurch wird bei einer Sinterung oberhalb von 1 400 °C eine flüssige Sinterphase mit dem $SrTiO_3$ gebildet — es wird angenommen, daß es sich hierbei um das bei ~ 1 440 °C auftretende Eutektikum $SrTiO_3$-$TiO_2$ handelt, das durch den Zusatz von Dotierstoffen auch bei niedrigeren Temperaturen auftreten kann. Eine flüssige Sinterphase dieser Art begünstigt das erwünschte grobkörnige Kornwachstum.

Die Rohstoffe werden in einer Menge, die der gewünschten Zusammensetzung entspricht, eingewogen und 2 h in einer Kugelmühle, z. B. aus Achat, naß gemischt. Anschließend erfolgt eine Vorsinterung 15 h bei 1 150 °C. Die vorgesinterten Pulver werden abermals naß aufgemahlen (1 h in einer Kugelmühle, z. B. aus Achat). Anschließend wird das Mahlgut getrocknet, und die so erhaltenen Pulver werden dann mit Hilfe eines geeigneten Bindemittels, z. B. eine 10%ige wässerige Polyvinylalkohollösung, granuliert. Das Granulat wird zu für keramische Widerstände geeigneten Formkörpern, z. B. zu Scheiben eines Durchmessers von ~ 6 mm und einer Dicke von ~ 0,50 mm auf eine grüne Dichte (Rohdichte) von ca. 55 bis 60 % der theoretischen Dichte verpreßt. Anschließend erfolgt die Sinterung der Preßlinge bei einer Temperatur von 1 460 °C über eine Dauer von 4 h in einer reduzierenden Atmosphäre. Die Atmosphäre kann z. B. aus mit Wasserdampf gesättrigtem Mischgas aus 90 Vol.% $N_2$ und 10 Vol.% $H_2$ bestehen. Da der Sauerstoffpartialdruck des Mischgases bestimmt wird durch das Verhältnis der beiden Partialdrucke $p_{H_2}/p_{H_2O}$, wurde das Mischgas mit $H_2O$ bei ~ 25 °C gesättigt, um eine stets vergleichbare Reduktionsatmosphäre zu schaffen.

Bei der Sinterung ist zu beachten, daß grobkörnige Gefüge vorzugsweise bei Sintertemperaturen oberhalb 1 440 °C auftreten.

Die reduzierende Sinterung soll in einem dichtschließenden Ofen erfolgen, z. B. ist ein Rohrofen geeignet. Überschüssiges Reduziergas soll zweckmäßigerweise über einen Blasenzähler abströmen, um eine stets gleichbleibende Sinteratmosphäre zu schaffen.

Auf diese Weise hergestellte Sinterkörper sind halbleitend und zeigen keine offene Porosität mehr.

Durch Nachoxidation dieser Sinterkörper in einer oxidierenden Atmosphäre, beispielsweise in Luft, werden in dem halbleitenden Korngefüge der Sinterkörper elektrisch hochisolierende Oxidschichten als Kornrandschichten erzeugt.

Versuche, die zum Anmeldungsgegenstand führten, wurden bei unterschiedlichen Bedingungen durchgeführt :

a) bei einer festen Nachoxidationsdauer von 120 min und unterschiedlichen Temperaturen von 900 °C, 1 000 °C, 1 100 °C, 1 200 °C oder 1 300 °C

b) bei einer festgelegten Temperatur von 1 100 °C und einer unterschiedlichen Nachoxidationsdauer von 5 min, 15 min, 30 min, 60 min, 120 min oder 240 min.

2. Herstellung von nichtlinearen Widerständen :

Auf wie oben beschrieben präparierte Sinterkörper wurden zur Bildung eines Widerstandsbauelementes Elektroden aus geeigneten Metallen, vorzugsweise aus Gold, z. B. durch Aufdampfen, aufgebracht. Zur besseren Haftung des Elektrodenmetalls empfiehlt es sich, auf den keramischen Sinterkörper zunächst eine geeignete Haftschicht als Zwischenschicht zwischen Keramik und Elektrodenmetall aufzubringen ; z. B. ist eine Cr-Ni-Schicht geeignet.

Anmerkungen zu speziellen Zusammensetzungen :

$(Sr_{1-x}La_x)TiO_3 \cdot yTiO_2$ ($0{,}000\,5 < x <$ Löslichkeitsgrenze des La in der Perowskitphase ; y = 0,001 bis 0,02) : wird $x < 0{,}000\,5$, oxidieren die zu sinternden Körper zu schnell, die Reproduzierbarkeit der Resultate ist nicht mehr gewährleistet.

Die Obergrenze von x ergibt sich aus der Löslichkeitsgrenze des La in der Perowskitphase. Optimale Ergebnisse wurden erreicht mit Sinterkörpern, die ein Gefüge mit Körnern eines Durchmessers von 80 bis 120 µm hatten mit x = 0,01 und y = 0,01 bei einer Sintertemperatur von 1 460 °C in reduzierender Atmosphäre.

$Sr(Ti_{1-x}Nb_x)O_3 \cdot yTiO_2$ ($0{,}000\,5 < x <$ Löslichkeitsgrenze des Nb in der Perowskitphase ; y = 0,001 bis 0,02) : für die Untergrenze von x gilt das gleiche, wie oben zu den La-Dotierungen ausgeführt ; ab x ~

0,03 und mehr wurden homogene Mikrostrukturen nicht mehr reproduzierbar beobachtet. Optimale Ergebnisse wurden erreicht mit Sinterkörpern, die ein Gefüge mit Körnern eines Durchmessers von 60 bis 80 µm hatten mit x = 0,01 und y = 0,01 bei einer Sintertemperatur von 1 460 °C in reduzierender Atmosphäre.

$Sr(Ti_{1-x}W_x)O_3 \cdot yTiO_2$ (0,000 5 < x < Löslichkeitsgrenze des W in der Perowskitphase ; y = 0,001 bis 0,02) : für die Untergrenze von x gilt das gleiche, wie oben zu den La—Dotierungen ausgeführt ; ab x ~ 0,01 wurden überwiegend feinkörnigere Mikrostrukturen beobachtet, ab x ~ 0,06 und mehr tritt zunehmend eine Ausscheidung von Fremdphasen in der Mikrostruktur auf, die aus $SrWO_4$ und $TiO_2$ besteht. Optimale Ergebnisse wurden erreicht mit Sinterkörpern, die ein Gefüge mit Körnern eines Durchmessers von 60 bis 80 µm hatten mit x = 0,004 und y = 0,01 bei einer Sintertemperatur von 1 460 °C in reduzierender Atmosphäre.

3. Ergebnisse :

In Fig. 1 ist die Strom-Spannungs-Kennlinie eines Widerstandes mit VDR-Charakteristik mit einem Sinterkörper der Zusammensetzung $(Sr_{0,99}La_{0,01})\ TiO_3 \cdot 0,01\ TiO_2$ dargestellt. Aufgetragen ist die Stromdichte in $mA/cm^2$ gegen die angelegte elektrische Feldstärke in kV/cm. Um die VDR-Charakteristik einzustellen, wurde der Sinterkörper 2 h bei 1 300 °C in oxidierender Atmosphäre nachoxidiert, nachdem er, wie bereits beschrieben ist, in reduzierender Atmosphäre gesintert worden war. Der Sinterkörper hatte eine Fläche von etwa 0,19 $cm^2$ und eine Dicke von etwa 400 µm.

In den Fig. 2a bis 2c sind die Einsatzspannungen bei einem Strom von 1 mA und die Stromindices β für Widerstände mit Sinterkörpern folgender Zusammensetzung in Abhängigkeit von der Nachoxidationstemperatur dargestellt :

Figur 2a : $Sr(Ti_{0,99}Nb_{0,01}O_3 \cdot 0,01\ TiO_2$

Figur 2b : $(Sr_{0,99}La_{0,01})TiO_3 \cdot 0,01\ TiO_2$

Figur 2c : $Sr(Ti_{0,996}W_{0,004})O_3 \cdot 0,01\ TiO_2$.

Die Zahlen an den einzelnen Kurven geben die Temperatur an, bei der 2 h in oxidierender Atmosphäre nachoxidiert wurde. Ein β = 1 bedeutet einen rein ohmschen Widerstand mit NTC-Eigenschaften (In den Fig. 2a bis 2c ist die Einsatzspannung logarithmisch aufgetragen, so daß Werte für β = 1 nicht mehr im Darstellungsbereich der x-Achse liegen). Dieser Wert wird von allen drei Materialgruppen vor dem Nachoxidieren bzw. bei niedrigen Nachoxidationstemperaturen erreicht (siehe Tabellen 1 und 2). Der Widerstand des Sinterkörpers liegt bei der gewählten Geometrie vor dem Nachoxidieren typischerweise bei Werten von einigen Ohm. Dies ergibt einen spezifischen Widerstand von ca. 10 Ω · cm. Die Fig. 2a bis 2c zeigen weiter, daß bei Erhöhung der Nachoxidationstemperatur der β-Wert sehr stark abfällt, also typisches VDR-Verhalten einsetzt. Insbesondere die mit La dotierten Sinterkörper zeigen, daß schon bei niedrigen Einsatzspannungen von einigen Volt β-Werte von 0,16 erzielt werden. Durch weiteres Erhöhen der Nachoxidationstemperatur kann bei ungefähr konstantem β die Einsatzspannung in weitem Bereich variiert werden.

In Fig. 3 ist die Strom- und Temperaturabhängigkeit des elektrischen Widerstandes für die nichtlinearen Widerstände gemäß der Erfindung schematisch dargestellt. Aufgetragen ist der Logarithmus des elektrischen Widerstandes ln(R) über der reziproken Temperatur 1/T. Der Bereich I kennzeichnet reines NTC-Verhalten, der Bereich II kennzeichnet VDR-Verhalten.

Ein Bereich konstanter Steigung in einem solchen Diagramm ergibt einen Zusammenhang von R und T gemäß $R = A \cdot e^{B/T}$ (R = Widerstand, gemessen in Ω ;

A = eine im wesentlichen von der äußeren Form des Widerstandes abhängige Konstante mit der Dimension Ω ;

e = Basis des natürlichen Logarithmus ;

B = eine von der äußeren Form und vom NTC-Werkstoff abhängige Konstante mit der Dimension K ;

T = absolute Temperatur des Widerstandes in K).

In weiten Temperaturbereichen ist ein solcher linearer Zusammenhang gegeben. Grundsätzlich lassen sich jedoch zwei Bereiche unterscheiden. Ein Bereich I, in dem ein hoher Wert von B, d. h. eine starke Temperaturabhängigkeit zu beobachten ist bei gleichzeitig fehlender Abhängigkeit vom angelegten Strom (NTC-Verhalten), und ein Bereich II, der durch flach verlaufende Kennlinien gekennzeichnet ist, d. h. eine geringe Temperaturabhängigkeit charakterisiert. Hier ist jedoch ein starker Einfluß des Stromes auf den Widerstand bemerkbar, dies ist also der Bereich, in dem VDR-Eigenschaften überwiegen. Beide Bereiche gehen bei jeweils unterschiedlichen Stromwerten und Temperaturen ineinander über.

In Fig. 4 ist die Strom- und Temperaturabhängigkeit des elektrischen Widerstandes eines nichtlinearen Widerstandes der Zusammensetzung $(Sr_{0,99}La_{0,01})TiO_3 \cdot 0,01\ TiO_2$ graphisch dargestellt. Aufgetragen ist der Logarithmus des elektrischen Widerstandes ln(R) über der reziproken absoluten Temperatur. Die Sinterkörper wurden 2 h in Luft bei einer Temperatur von 1 100 °C respektive 1 200 °C nachoxidiert, nachdem sie, wie oben beschrieben, in reduzierender Atmosphäre gesintert worden waren.

Der Einfluß der höheren Nachoxidationstemperatur macht sich hier in einer Verschiebung der Kurvenschar zu höheren Widerstandswerten bemerkbar.

Die nachfolgende Tabelle 1 gibt die Zahlenwerte des Nichtlinearitätsfaktors β und der Einsatzspannung $U_{1mA}$ für einzelne Dotierungen und Nachoxidationstemperaturen wieder.

Tabelle 1

| Nachoxidationstemperatur($^{o}C$); (Nachoxidationsdauer 2 h) | $Sr(Ti_{0,99}Nb_{0,01})O_3 \cdot 0,01TiO_2$ | | $(Sr_{0,99}La_{0,01})TiO_3 \cdot 0,01TiO_2$ | | $Sr(Ti_{0,996}W_{0,004})O_3 \cdot 0,01TiO_2$ | |
|---|---|---|---|---|---|---|
| | Stromindex $\beta$ | Einsatzspannung $U_{1mA}$ (V) | Stromindex $\beta$ | Einsatzspannung $U_{1mA}$ (V) | Stromindex $\beta$ | Einsatzspannung $U_{1mA}$ (V) |
| 900 | 0,75 | 0,09 | 1 | 0,002 | 0,44 | 0,5 |
| 1000 | 0,6 | 0,21 | 0,94 | 0,017 | 0,19 | 5,1 |
| 1100 | 0,57 | 0,47 | 0,34 | 0,5 | 0,19 | 7,3 |
| 1200 | 0,24 | 3,2 | 0,16 | 2,2 | 0,15 | 12,5 |
| 1300 | 0,13 | 20,6 | 0,17 | 6,6 | 0,13 | 16,8 |

Dicke der Sinterkörper einheitlich ~ 400 µm
Durchmesser der Sinterkörper einheitlich ~ 5 mm

Die Tabelle 2 zeigt den Einfluß der Nachoxidationsdauer bei konstanter Temperatur von 1 100 °C. Auch hier bestätigt sich, daß eine zunehmende Stärke der Nachoxidation, gegeben durch eine höhere Temperatur oder längere Nachoxidationsdauer, die Werte für den Stromindex β und die Einsatzspannung $U_{1mA}$ beeinflußt (siehe auch Fig. 2a bis 2c).

Fig. 5 stellt als Beispiel einen fertigen, nicht linearen Widerstand gemäß der Erfindung dar mit einem Sinterkörperl, Metallelektroden 2,3 und Anschlußdrähten 4.

(Siehe Tabelle 2 Seite 8 f.)

Tabelle 2

| Nachoxidationsdauer (min) (Nachoxidationstemperatur 1100°C) | $Sr(Ti_{0,99}Nb_{0,01})O_3 \cdot 0,01TiO_2$ | | $(Sr_{0,99}La_{0,01})TiO_3 \cdot 0,01TiO_2$ | | $Sr(Ti_{0,996}W_{0,004})O_3 \cdot 0,01TiO_2$ | |
|---|---|---|---|---|---|---|
| | Stromindex $\beta$ | Einsatzspannung $U_{1mA}$ (V) | Stromindex $\beta$ | Einsatzspannung $U_{1mA}$ (V) | Stromindex $\beta$ | Einsatzspannung $U_{1mA}$ (V) |
| 5 | 0,68 | 0,13 | 1 | 0,003 | 0,27 | 1,4 |
| 15 | 0,59 | 0,22 | 1 | 0,005 | 0,21 | 2,5 |
| 30 | 0,64 | 0,23 | 1 | 0,010 | 0,22 | 3,0 |
| 60 | 0,57 | 0,36 | 0,75 | 0,07 | 0,15 | 5,7 |
| 240 | 0,62 | 1,6 | 0,2 | 1,1 | 0,15 | 7,2 |

Dicke der Sinterkörper einheitlich ~ 400 µm
Durchmesser der Sinterkörper einheitlich ~ 5 mm

**Patentansprüche**

1. Nichtlinearer Widerstand mit einem keramischen Sinterkörper auf Basis eines polykristallinen, mit einer geringen Menge eines Metalloxids zur Erzeugung einer N-Typ-Leitfähigkeit dotierten Erdalkalimetalltitanats mit auf einander gegenüberliegenden Flächen angebrachten Elektroden, dadurch gekennzeichnet, daß der Sinterkörper an seinen Korngrenzen durch Nachoxidation des Sinterkörpers gebildete isolierende Schichten enthält und aus einem Erdalkalimetalltitanat mit Perowskitstruktur der allgemeinen Formel

$$(A_{1-x})TiO_3 \cdot yTiO_2 \text{ oder } A(Ti_{1-x}Me_x)O_3 \cdot yTiO_2$$

besteht, worin bedeuten :

A = Erdalkalimetall

SE = Seltenerdmetall

Me = Metall mit einer Wertigkeit von 5 oder mehr $0{,}000\,5 < x <$ Löslichkeitsgrenze in der Perowskitphase

y = 0,001 bis 0,02.

2. Nichtlinearer Widerstand nach Anspruch 1, dadurch gekennzeichnet, daß als Erdalkalimetall Strontium gewählt ist.

3. Nichtlinearer Widerstand nach Anspruch 1, dadurch gekennzeichnet, daß als Seltenerdmetall Lanthan gewählt ist.

4. Nichtlinearer Widerstand nach Anspruch 1, dadurch gekennzeichnet, daß als Metall mit der Wertigkeit 5 Niob gewählt ist.

5. Nichtlinearer Widerstand nach Anspruch 1, dadurch gekennzeichnet, daß als Metall mit der Wertigkeit > 5 Wolfram gewählt ist.

6. Verfahren zur Herstellung eines nichtlinearen Widerstandes mit einem keramischen Sinterkörper auf Basis eines polykristallinen, mit einer geringen Menge eines Metalloxids zur Erzeugung einer N-Typ-Leitfähigkeit dotierten Erdalkalimetalltitanats nach einem der vorhergehenden Ansprüche, dadurch gekennzeichnet, daß der keramische Körper zunächst in reduzierender Atmosphäre gesintert und daß dieser Sinterkörper anschließend in oxidierender Atmosphäre, vorzugsweise in Luft, nachoxidiert wird, wobei der Sinterkörper durch Auswahl der Nachoxidationstemperatur und der Nachoxidationsdauer in seinem nichtlinearen Widerstandsverlauf derart einstallbar wird, daß eine anfänglich vorhandene NTC-Charakteristik allmählich nur bei immer höheren Temperaturen beobachtbar ist und im Bereich der Betriebstemperatur des Widerstandes in eine VDR-Charakteristik übergeht.

7. Verfahren nach Anspruch 6, gekennzeichnet durch folgende Verfahrensschritte :

a) Mahlen eines Gemisches der Ausgangssubstanzen für ein Erdalkalimetalltitanat mit Perowskitstruktur mit einem dotierend wirkenden Zusatz eines Metalloxids zur Erzeugung einer N-Typ-Leitfähigkeit nach den Formeln

$$(A_{1-x}SE_x)TiO_3 \cdot yTiO_2 \text{ oder } A(Ti_{1-x}Me_x)O_3 \cdot yTiO_2$$

worin bedeuten :

A = Erdalkalimetall

SE = Seltenerdmetall

Me = Metall mit einer Wertigkeit von 5 oder mehr $0{,}000\,5 < x <$ Löslichkeitsgrenze in der Perowskitphase

y = 0,001 bis 0,02 ;

b) Vorsintern des Mahlgutes gemäß Schritt a) 2 bis 20 h im Temperaturbereich von 1 050 bis 1 350 °C in Luft ;

c) Mahlen und Granulieren des Sintergutes gemäß Schritt b) mit einem geeigneten Bindemittel ;

d) Verpressen des Mahlgutes gemäß Schritt c) zu einem für einen Widerstand geeigneten Formkörper ;

e) Sintern des Formkörpers gemäß Schritt d) 1 bis 10 h bei einer Temperatur im Bereich von 1 400 bis 1 500 °C in reduzierender Atmosphäre ;

f) Nachoxidation des Sinterkörpers gemäß Schritt e) in oxidierender Atmosphäre, vorzugsweise in Luft, 5 bis 240 min bei einer Temperatur im Bereich von 900 bis 1 300 °C ;

g) Aufbringen von Metallelektroden auf einander gegenüberliegenden Flächen des nachoxidierten Sinterkörpers gemäß Schritt f).

8. Verfahren nach Anspruch 7, dadurch gekennzeichnet, daß das Erdalkalimetalltitanat durch Umsetzung von $SrCO_3$ mit $TiO_2$ im molaren Verhältnis 1 : 1,001 bis 1 : 1,02 unter Zusatz der dotierenden Metalle in Form ihrer Oxide in einer Menge von 0,05 bis maximal 60 Mol% des zu substituierenden Bestandteiles nach Aufmahlen und Vorsintern 15 h bei 1 150 °C in Luft gebildet wird.

9. Verfahren nach Anspruch 7, dadurch gekennzeichnet, daß als dotierendes Metalloxid $La_2O_3$ eingesetzt wird.

10. Verfahren nach Anspruch 7, dadurch gekennzeichnet, daß als dotierendes Metalloxid $Nb_2O_5$ eingesetzt wird.

11. Verfahren nach Anspruch 7, dadurch gekennzeichnet, daß als dotierendes Metalloxid $WO_3$ eingesetzt wird

12. Verfahren nach Anspruch 7, dadurch gekennzeichnet, daß als Bindemittel eine 10%ige wässerige Polyvinylalkohollösung eingesetzt wird.

13. Verfahren nach Anspruch 7, dadurch gekennzeichnet, daß der Formkörper gemäß Schritt d) 4 h bei einer Temperatur von 1 460 °C in einer reduzierenden Atmosphäre bestehend aus mit Wasserdampf gesättigtem Mischgas aus 90 Vol.% $N_2$ und 10 Vol.% $H_2$ gesintert wird.

14. Verfahren nach Anspruch 13, dadurch gekennzeichnet, daß das Mischgas mit $H_2O$ bei $\approx$ 25 °C gesättigt wird.

15. Verfahren nach den Ansprüchen 6 und 7, dadurch gekennzeichnet, daß der Sinterkörper gemäß Schritt e) zum Beibehalten seiner NTC-Charakteristik im Betriebstemperaturbereich um Raumtemperatur, abhängig von der Art seiner Dotierung, 30 min bei einer Temperatur von maximal 1 200 °C an Luft nachoxidiert wird.

16. Verfahren nach den Ansprüchen 6 und 7, dadurch gekennzeichnet, daß der Sinterkörper gemäß Schritt e) zum Erreichen einer VDR-Charakteristik bei Betriebstemperatur, abhängig von der Art seiner Dotierung, mindestens 5 min bei einer Temperatur von 1 100 °C an Luft nachoxidiert wird.

17. Verfahren nach Anspruch 15, dadurch gekennzeichnet, daß für einen Winderstand mit NTC-Charakteristik ein Sinterkörper der Zusammensetzung $(Sr_{0,99}La_{0,01})TiO_3 \cdot 0{,}01\ TiO_2$ gewählt wird, der bei einer Temperatur von 1 100 °C 30 min nachoxidiert wird.

18. Verfahren nach Anspruch 16, dadurch gekennzeichnet, daß für einen Widerstand mit VDR-Charakteristik ein Sinterkörper der Zusammensetzung $Sr(Ti_{0,996}W_{0,004})O_3 \cdot 0{,}01\ TiO_2$ gewählt wird, der bei einer Temperatur von 1 100 °C 60 min nachoxidiert wird.

## Claims

1. A non-linear resistor having a ceramic sintered body on the basis of a polycrystalline alkaline earth metal titanate doped with a small amount of a metal oxide so as to produce an N-type conductivity, the body having electrodes provided on oppositely located surfaces, characterized in that the sintered body comprises at its grain boundaries insulating layers formed by re-oxidation of the sintered body and consists of a perovskite structure alkaline earth metal titanate having the general formula

$$(A_{1-x}Ln_x)TiO_3 \cdot yTiO_2 \text{ or } A(Ti_{1-x}Me_x)O_3 \cdot yTiO_2,$$

wherein :

A = alkaline earth metal

Ln = rare earth metal

Me = metal having a valency of 5 or more

$0.000\,5 < x <$ solubility limit in the perovskite phase

y = 0.001 to 0.02.

2. A non-linear resistor as claimed in Claim 1, characterized in that strontium has been chosen as an alkaline earth metal.

3. A non-linear resistor as claimed in Claim 1, characterized in that lanthanum has been chosen as a rare earth metal.

4. A non-linear resistor as claimed in Claim 1, characterized in that niobium has been chosen as a metal having the valency 5.

5. A non-linear resistor as claimed in Claim 1, characterized in that tungsten has been chosen as a metal having the valency > 5.

6. A method of manufacturing a non-linear resistor having a ceramic sintered body on the basis of a poly-crystalline alkaline earth metal titanate doped with a small quantity of a metal oxide so as to produce an N-type conductivity as claimed in any of the preceding Claims, characterized in that the ceramic body is first sintered in a reducing atmosphere and that said sintered body is then re-oxidized in an oxidizing atmosphere, preferably in air, in which the sintered body becomes adjustable in its non-linear resistance variation by a selection of the re-oxidation temperature and the re-oxidation duration in such a manner that an initially present NTC-characteristic is observable gradually only at increasing temperatures and in the range of the operating temperature of the resistor changes into a VDR-characteristic.

7. A method as claimed in Claim 6, characterized by the following operational steps :

a) grinding a mixture of the starting substances for an alkaline earth metal titanate defined by the formula

$$(A_{1-x}Ln_x)TiO_3 \cdot yTiO_2 \text{ or } A(Ti_{1-x}Me_x)O_3 \cdot yTiO_2$$

having a perovskite structure with an addition of a metal oxide having a doping function so as to produce an N-type conductivity wherein :

A = alkaline earth metal

Ln = rare earth metal

Me = metal having a valency of 5 or more
0.000 5 < x < solubility limit in the perovskite phase
y = 0.001 to 0.02 ;

b) pre-sintering the ground product formed by step (a) in a temperature range of 1 050 to 1 350 °C for 2 to 20 hours in air ;

c) grinding and granulating the pre-sintered product formed by step (b) with a suitable binder ;

d) compressing the granulated product formed by step (c) to form a moulded body-suitable for a resistor ;

e) sintering the moulded body formed by step (d) in a reducing atmosphere at a temperature in the range of 1 400 to 1 500 °C for 1 to 10 hours ;

f) re-oxidizing the sintered body formed by step (e) in an oxidizing atmosphere, preferably in air, at a temperature in the range from 900 to 1 300 °C for 5 to 240 minutes ;

g) providing metal electrodes on oppositely located surfaces of the reoxidized sintered body formed by step (f).

8. A method as claimed in Claim 7, characterized in that the alkaline earth metal titanate is formed by reaction of $SrCO_3$ with $TiO_2$ in the molar ratio from 1 : 1.001 to 1 : 1.02 by adding the doping metals in the form of their oxides in a quantity from 0.05 to maximum 60 mol.% of the constituent to be substituted after grinding and pre-sintering at 1 150 °C in air for 15 hours.

9. A method as claimed in Claim 7, characterized in that $La_2O_3$ is used as a doping metal oxide.

10. A method as claimed in Claim 7, characterized in that $Nb_2O_5$ is used as a doping metal oxide.

11. A method as claimed in Claim 7, characterized in that $WO_3$ is used as a doping metal oxide.;

12. A method as claimed in Claim 7, characterized in that a 10 % aqueous polyvinyl alcohol solution is used as a binder.

13. A method as claimed in Claim 7, characterized in that the moulded body formed by step (d) is sintered for 4 hours at a temperature of 1 460 °C in a reducing atmosphere consisting of water vapour-saturated mixed gas consisting of 90 % by volume of $N_2$ and 10 % by volume of $H_2$.

14. A method as claimed in Claim 13, characterized in that the mixed gas is saturated with $H_2O$ at ~ 25 °C.

15. A method as claimed in Claims 6 and 7, characterized in that the sintered body formed by step (e) is re-oxidized in air at a temperature of at most 1 200 °C for 30 minutes so as to maintain its NTC-characteristic in the operating temperature range about room temperature dependent on the nature of its doping.

16. A method as claimed in Claims 6 and 7, characterized in that the sintered body formed by step (e) is re-oxidized in air at a temperature of 1 100 °C for at least 5 minutes so as to obtain a VDR-characteristic at the operating temperature, dependent on the nature of its doping.

17. A method as claimed in Claim 15, characterized in that for a resistor having NTC-characteristic a sintered body is chosen of the composition $(Sr_{0.99}La_{0.01})TiO_3 \cdot 0.01\ TiO_2$ which is re-oxidized at a temperature of 1 100 °C for 30 minutes.

18. A method as claimed in Claim 16, characterized in that for a resistor having VDR-characteristic a sintered body of the composition $Sr(Ti_{0.996}W_{0.004})O_3 \cdot 0.01TiO_2$ is chosen which is re-oxidized at a temperature of 1 100 °C for 60 minutes.

**Revendications**

1. Résistance non linéaire présentant un corps fritté céramique à base d'un titanate de métal alcalino-terreux polycristallin, dopé avec une petite quantité d'un oxyde métallique, présentant des électrodes appliquées sur des surfaces situées vis-à-vis, caractérisée en ce qu'à ses limites des grains, le corps fritté présente des couches isolantes formées par oxydation postérieure du corps fritté et est constitué par un titanate de métal alcalino-terreux présentant la structure de Perowskite répondant à la formule générale

$$(A_{1-x}SE_x)TiO_3 \cdot yTiO_2 \text{ ou } A(Ti_{1-x}Me_x)O_3 \cdot yTiO_2,$$

formule dans laquelle
A = métal alcalino-terreux
SE = métal des terres rares
Me = métal présentant une valence d'au moins 5, 0,000 5 < x < limite de solubilité dans la phase de Perowskite
y = 0,001 à 0,02

2. Résistance non-linéaire selon la revendication 1, caractérisée en ce que du strontium est choisi comme métal alcalino-terreux.

3. Résistance non-linéaire selon la revendication 1, caractérisée en ce que du lanthane est choisi comme métal des terres rares.

4. Résistance non-linéaire selon la revendication 1, caractérisée en ce que du niobium est choisi comme métal présentant la valence 5.

5. Résistance non-linéaire selon la revendication 1, caractérisée en ce que du tungstène est choisi comme métal présentant la valence > 5.

6. Procédé pour la réalisation d'une résistance non linéaire présentant un corps fritté céramique à base d'un titanate de métal alcalino-terreux dopé avec une petite quantité d'un oxyde métallique pour l'obtention d'une conductivité de type n selon l'une des revendications précédentes, caractérisé en ce que le corps céramique est d'abord fritté dans une atmosphère réductrice et ensuite que ce corps fritté est soumis à une post-oxydation dans une atmosphère oxydante, de préférence de l'air, de façon que le corps fritté soit établi, par choix de la température de post-oxydation et de la durée de post-oxydation, dans sa variation non-linéaire de la résistance, de façon qu'une caractéristique de CTN initialement présente ne puisse être observée graduellement qu'à des températures toujours plus élevées et passe en une caractéristique VDR dans la zone de la température de fonctionnement de la résistance.

7. Procédé selon la revendication 6, caractérisé par les étapes de réalisations suivantes :

a) broyage d'un mélange des substances de départ pour un titanate d'un métal alcalino-terreux présentant la structure de Perowskite avec une addition fonctionnant comme dopant d'un oxyde métallique pour l'obtention d'une conductivité de type n selon la formule

$$(A_{1-x}Se_x)TiO_3 \cdot yTiO_2 \text{ ou } A(Ti_{1-x}Me_x)O_3 \cdot yTiO_2$$

dans laquelle :

A = métal alcalino-terreux

SE = métal des terres rares

Me = métal présentant une valence d'au moins 5, $0{,}0005 < x <$ limite de solubilité dans la phase de Perowskite

y = 0,001 à 0,02

b) préfrittage de la matière moulue selon l'étape a) pendant 2 a 20 h dans une gamme de températures comprises entre 1 050 à 1 350 °C dans de l'air ;

c) broyage et granulation de la matière frittée selon l'état b) à l'aide d'un liant approprié ;

d) pressage de la matière moulue selon l'étape c) de façon à obtenir un corps approprié pour une résistance ;

e) frittage du corps obtenu selon l'étape d) pendant 1 à 10 heure(s) à une température de la gamme comprise entre 1 400 et 1 500 °C dans une atmosphère réductrice ;

f) post-oxydation du corps fritté selon l'état e) dans une atmosphère oxydante, de préférence dans de l'air, pendant 5 à 240 minutes à une température de la gamme comprise entre 900 à 1 300 °C ;

g) application d'électrodes métalliques sur des surfaces mises en face du corps fritté post-oxydé selon l'étape f).

8. Procédé selon la revendication 7, caractérisé en ce que le titanate de métal alcalino-terreux est formé par transformation de $SrCO_3$ avec $TiO_2$ dans un rapport molaire 1 : 1,001 à 1 : 1,02 avec addition des métaux de dopage sous forme de leurs oxydes en quantité de 0,05 à au maximum 60 % en moles des composants à remplacer après broyage et préfrittage pendant 15 heures à 1 150 °C dans de l'air.

9. Procédé selon la revendication 7, caractérisé en ce que $La_2O_3$ est utilisé comme oxyde métallique de dopage.

10. Procédé selon la revendication 7, caractérisé en ce que $Nb_2O_5$ est utilisé comme oxyde métallique de dopage.

11. Procédé selon la revendication 7, caractérisé en ce que $WO_3$ est utilisé comme oxyde métallique de dopage.

12. Procédé selon la revendication 7, caractérisé en ce qu'une solution aqueuse d'alcool polyvinylique à 10 % est utilisée comme liant.

13. Procédé selon la revendication 7, caractérisé en ce que le corps obtenu selon l'étape d) est fritté pendant 4 heures à une température de 1 460 °C dans une atmosphère réductrice constituée par un gaz mixte saturé de vapeur d'eau et constitué par 90 % en volume de $N_2$ et 10 % en volume de $H_2$.

14. Procédé selon la revendication 13, caractérisé en ce que le gaz mixte est saturé de $H_2O$ à environ 25 °C.

15. Procédé selon les revendications 6 et 7, caractérisé en ce que pour maintenir sa caractéristique CTN dans la gamme de températures de fonctionnement située autour de la température ambiante normale suivant le genre de dopage, le corps fritté selon l'étape e) est post-oxydé à l'air, pendant 30 minutes à une température d'au maximum 1 200 °C.

16. Procédé selon les revendications 6 et 7, caractérisé en ce que pour obtenir une caractéristique VDR à la température de fonctionnement, le corps fritté selon l'étape e) est post-oxydé, suivant le genre de son dopage, pendant au moins 5 minutes à une température de 1 100 °C.

17. Procédé selon la revendication 15, caractérisé en ce qu'un corps fritté présentant la composition $(Sr_{0,99}La_{0,01})TiO_3 \cdot 0{,}01\ TiO_2$ est choisi pour une résistance à caractéristique CTN et post-oxydé à une température de 1 100 °C pendant 30 minutes.

18. Procédé selon la revendication 16, caractérisé en ce qu'un corps fritté de la composition $Sr(Ti_{0,996}W_{0,004})O_3 \cdot 0{,}01\ TiO_2$ est choisi pour une résistance à caractéristique VDR et post-oxydé à une température de 1 100 °C pendant 60 minutes.

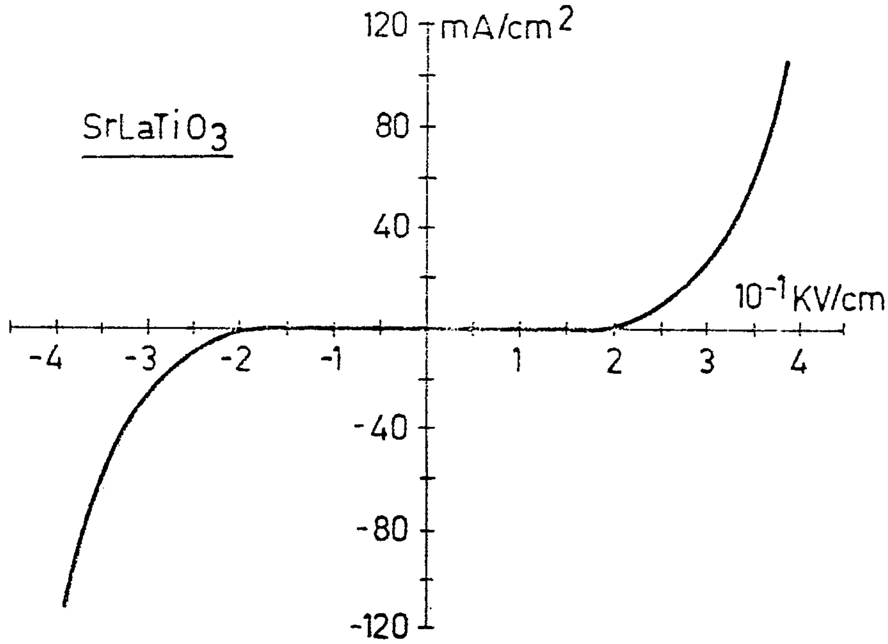
120
mA/cm2
SrLaTiO3
80
40
10-1 KV/cm
-4
-3
-2
-1
1
2
3
4
-40
-80
-120

FIG.1

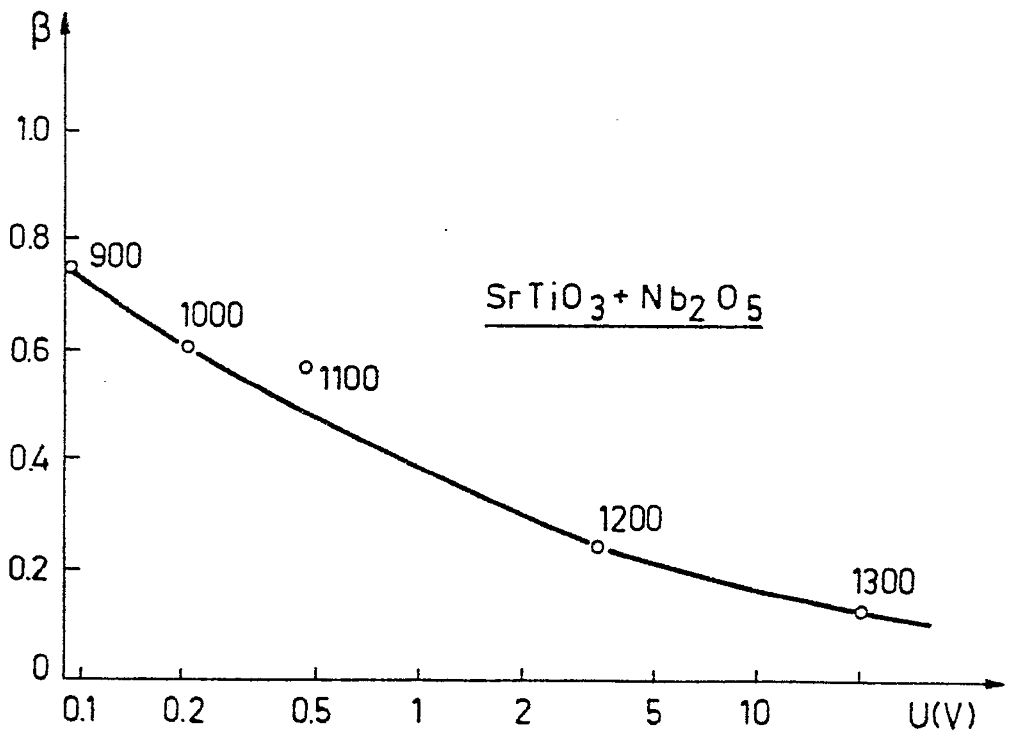
β
1.0
0.8
0.6
0.4
0.2
0
900
1000
1100
1200
1300
SrTiO3 + Nb2O5
0.1
0.2
0.5
1
2
5
10
U(V)

FIG.2a

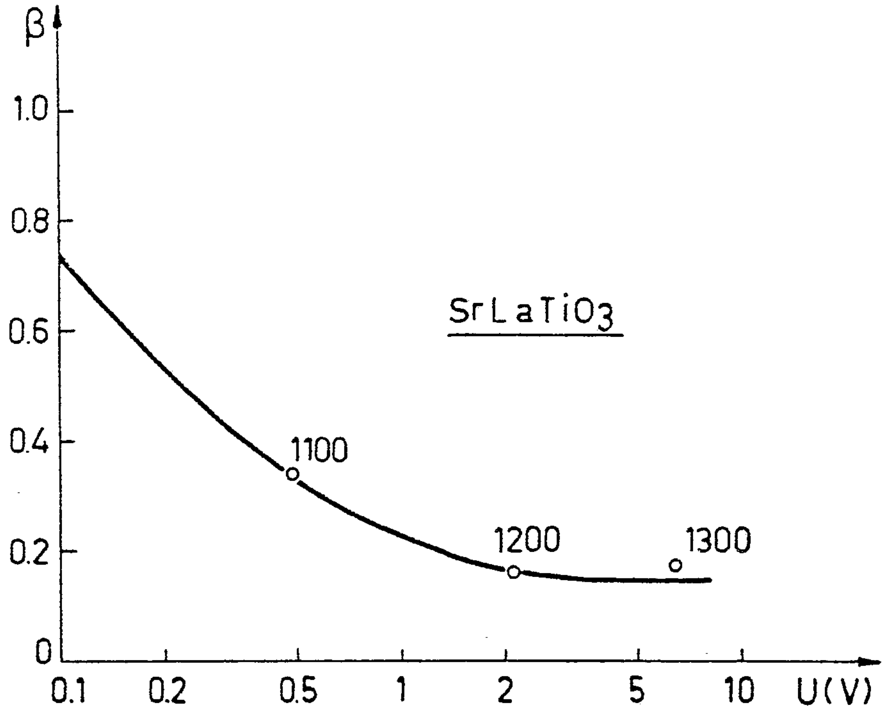
β
1.0
0.8
0.6
0.4
0.2
0
SrLaTiO3
1100
1200
1300
0.1
0.2
0.5
1
2
5
10
U(V)

FIG.2b

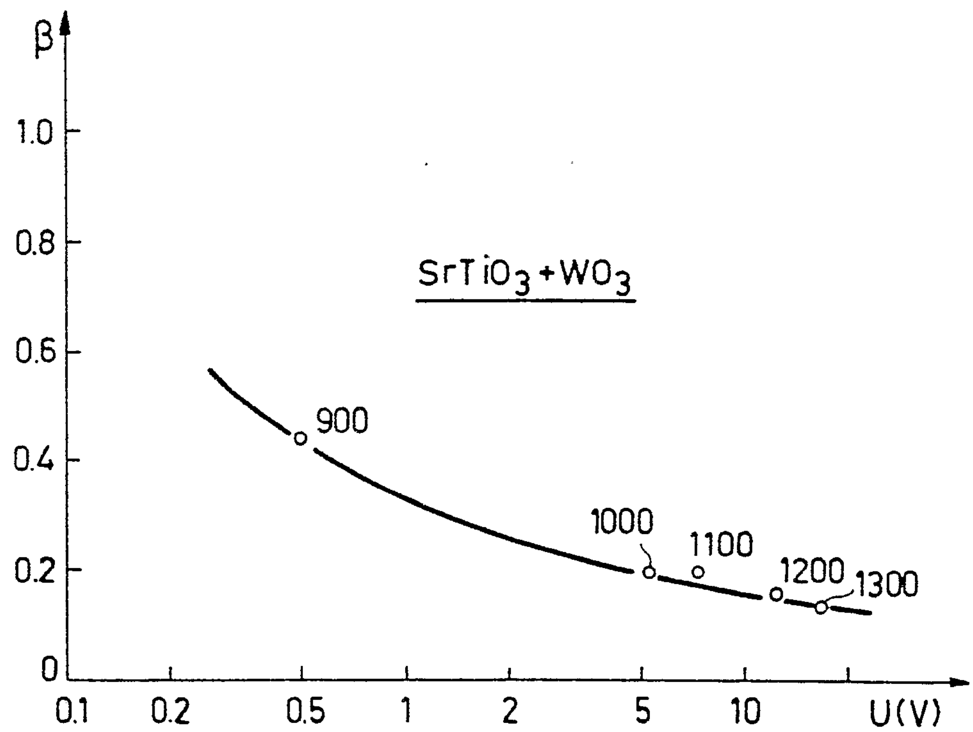
β
1.0
0.8
0.6
0.4
0.2
0
SrTiO3+WO3
900
1000
1100
1200
1300
0.1
0.2
0.5
1
2
5
10
U(V)

FIG.2c

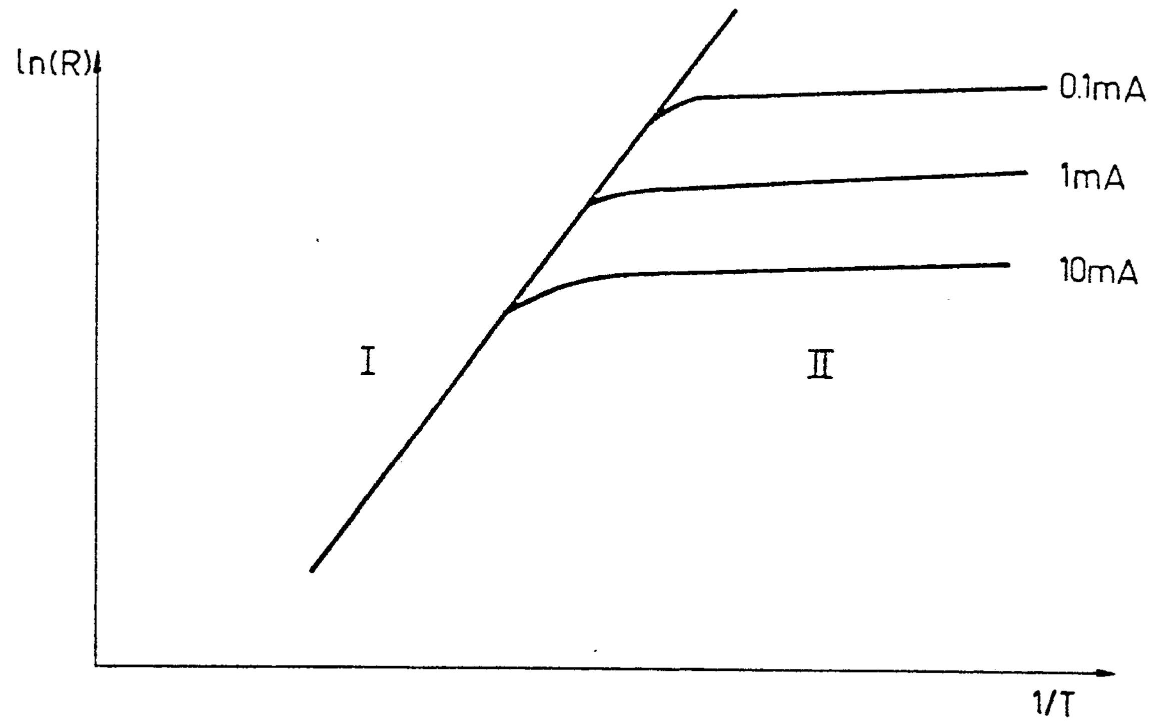
ln(R)
0.1mA
1mA
10mA
I
II
1/T

FIG.3

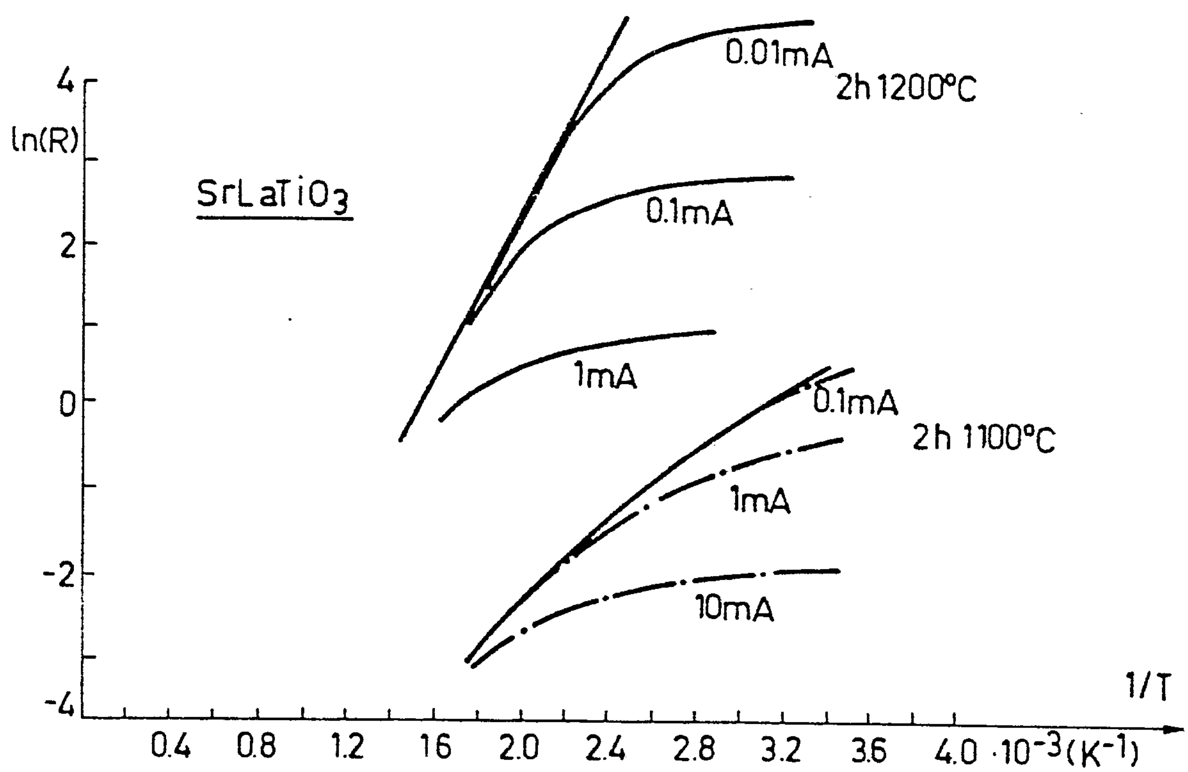
4
ln(R)
2
0
-2
-4
SrLaTiO3
0.01mA
2h 1200°C
0.1mA
1mA
0.1mA
2h 1100°C
1mA
10mA
1/T
0.4
0.8
1.2
1.6
2.0
2.4
2.8
3.2
3.6
4.0 ·10-3(K-1)

FIG.4

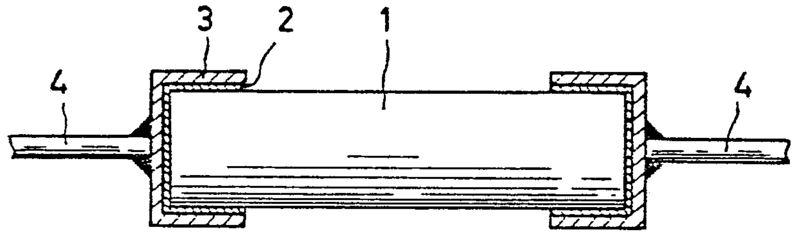


FIG.5